# EUROPÄISCHE PATENTANMELDUNG

(11) **EP 4 808 105 A1**
(43) Veröffentlichungstag der Anmeldung: **16.09.2026**
(21) Anmeldenummer: 25162472.2
(22) Anmeldetag: 09.03.2025
(51) Int. Cl.: H04N 5/265, H04N 5/268, H04N 23/61, H04N 23/62, H04N 23/66, H04N 23/695

(54) **MULTIMEDIASYSTEM UND VERFAHREN ZUR GENERIERUNG VON MULTIMEDIAINHALTEN**

(71) Anmelder: AutoDirector GmbH, 04416 Markkleeberg (DE)
(72) Erfinder: Frind, Matti, 14057 Berlin-Charlottenburg (DE); Kleinsteuber, Felix, 13407 Berlin (DE)
(74) Vertreter: Mzb PartmbB

(57) **Zusammenfassung**

Die Erfindung betrifft ein Multimediasystem (10) zur effizienten Erstellung von qualitativ hochwertigen Multimediainhalten, beispielsweise zur Erstellung von Videofilmen, umfassend wenigstens zwei Videoeingänge (12) zur Aufnahme von wenigstens zwei Videoeingangssignalen (14), wenigstens einen Videoausgang (19, 26) zur Bereitstellung eines Videoausgangssignals (20, 28) und / oder wenigstens einen Mischsteuerausgang (21) zur Bereitstellung eines Mischsteuerungssignals (22) zur Steuerung eines Videomischers (24), wobei das Multimediasystem (10) eingerichtet ist, in Abhängigkeit eines auswählbaren Szenentyps (46) , aus den wenigstens zwei Videoeingangssignalen (14) das Videoausgangssignal (20, 28) zu mischen und / oder das Mischsteuerungssignal (22) zur Steuerung des Videomischers (24) zu erzeugen. Ferner betrifft die Erfindung ein Verfahren (1000) zur effizienten Erstellung von qualitativ hochwertigen Multimediainhalten.

## Beschreibung

Die vorliegende Erfindung betrifft ein Multimediasystem zur Erstellung von Multimediainhalten, beispielsweise zur Erstellung von Videofilmen. Des Weiteren betrifft die Erfindung ein Verfahren zur Erstellung von solchen Multimediainhalten.

### Stand der Technik

Aus der Patentschrift US7827491B2 sind ein System und Verfahren zur Videobearbeitung bekannt, mit denen mithilfe eines Maschinenlerners Videos geschnitten werden können.

Aus der deutschen Offenlegungsschrift DE102012105784A1 ist ein Videokonferenzsystem und ein Videokonferenzverfahren bekannt, bei dem eine Videokamera-Vorrichtung neben der Videokamera selbst eine Bewegungseinrichtung und eine automatische Fokussiereinrichtung umfasst. Die automatische Fokussiereinrichtung kann eingerichtet sein, die Videokamera auf ein Übungsheft zu fokussieren, sodass eine von einem Teilnehmer beschriebene Seite des Übungshefts oder zumindest ein Bereich in unmittelbarer Umgebung einer Stiftspitze eines Stiftes des Teilnehmers im Fokus liegt.

### Offenbarung der Erfindung

Große Rundfunkanstalten, beispielsweise große staatliche Rundfunkanstalten oder große Medienkonzerne, können in der Regel hinreichende Ressourcen aufbringen, um Videomaterial von Veranstaltungen, Musikaufführungen wie beispielsweise Orchesterauftritten, Präsentationen, Vorträgen oder dergleichen professionell aufnehmen und schneiden zu können.

Dazu sind jedoch häufig kleine, lokale Medienhäuser, beispielsweise regionale Medienproduzenten wie beispielsweise regionale Fernsehsender oder Medienhäuser von Kleinststaaten wie beispielsweise die private Fernsehproduktionsgesellschaft im Fürstentum Liechtenstein, nur sehr eingeschränkt in der Lage. Hinzu kommt, dass solche lokale Medienhäuser oftmals über regionale Ereignisse berichten. Häufig fallen mehrere solcher regionaler Ereignisse zeitlich zusammen, sodass ein kleines, lokales Medienhaus sich mangels einer hinreichenden Anzahl von parallel arbeitenden Aufnahmeteams entscheiden muss, über welches der Ereignisse es berichten möchte.

Ähnliches trifft auch auf private oder halbprivate Produzenten von Multimediainhalten wie beispielsweise eine weiter steigende Anzahl von sogenannten Influencern zu.

Trotz ihrer Kleinheit sind derartige Kleinstproduzenten von Multimediainhalten dem Verlangen nach hochwertiger Qualität des von ihnen erstellten Videomaterials ausgesetzt, um einen ausreichenden Marktwert zur Vermarktung solchen Videomaterials und / oder von Werbezeiten in Verbindung mit dem Videomaterial erreichen zu können.

Aufgabe der vorliegenden Erfindung ist es daher, Systeme und Verfahren anzubieten, die eine effiziente Erstellung und / oder Postproduktion von Multimediainhalten in hoher Qualität ermöglichen.

Gelöst wird die Aufgabe zunächst durch ein Multimediasystem zur Erstellung von Multimediainhalten, beispielsweise zur Erstellung von Videofilmen. Das Multimediasystem umfasst wenigstens zwei Videoeingänge zur Aufnahme von wenigstens zwei Videoeingangssignalen, sowie wenigstens einen Videoausgang zur Bereitstellung eines Videoausgangssignals und / oder wenigstens einen Steuerausgang zur Bereitstellung eines Mischsteuerungssignals zur Steuerung eines Videomischers, wobei das Multimediasystem eingerichtet ist, in Abhängigkeit eines auswählbaren Szenentyps, aus den wenigstens zwei Videoeingangssignalen das Videoausgangssignal zu mischen und / oder das Mischsteuerungssignal zur Steuerung des Videomischers zu erzeugen.

Das Multimediasystem kann somit die wenigstens zwei Videoeingangssignale verarbeiten und als Ergebnis das Videoausgangssignal und / oder das Mischsteuerungssignal bereitzustellen. Insbesondere kann das Multimediasystem eingerichtet sein, entweder das Videoausgangssignal oder das Mischsteuerungssignal bereitzustellen. **In** das Videoausgangssignal können die Daten der Videoeingangssignale zusammen gemischt werden. Alternativ ist denkbar, dass das Multimediasystem nicht selbst die Videoeingangssignale mischt, sondern dass das Mischsteuerungssignal an einen, beispielsweise externen, Videomischer gesendet wird.

Die Videoeingangssignale können an den Videomischers weitergeleitet und / oder an diesen abgezweigt sein. Der Videomischer kann eingerichtet sein, mithilfe des Mischsteuerungssignals gesteuert zu werden. Insbesondere kann er eingerichtet sein, die Videoeingangssignale entsprechend dem Mischsteuerungssignal zu mischen.

Dabei ist ein Gedanke der Erfindung, dass das Multimediasystem das Videoausgangssignal in Abhängigkeit des Szenentyps mischt oder über das Mischsteuerungssignal mischen lassen kann.

Anhand des Szenentyps können Einstellungen in Bezug auf das Mischen der Videoeingangssignale durch das Multimediasystem auf einfache Weise an zu erwartende oder bereits vorliegende Multimediainhalte und Aufnahmeziele angepasst werden.

Die Postproduktion, insbesondere das Mischen der Videoeingangssignale zu dem Videoausgangssignal, kann somit abgestimmt auf die Multimediainhalte und / oder die Aufnahmeziele erfolgen. Manuelle Tätigkeiten, beispielsweise im Bereich des Videoschnitts, können minimiert werden oder gänzlich entfallen. Somit können mit geringem Aufwand und somit besonders effizient Multimediainhalte mit hoher Qualität erzeugt werden.

Der Szenentyp kann aus einer Liste einer Vielzahl von standardisierten Szenentypen auswählbar sein. Beispielsweise kann der Szenentyp einer Einstellung entsprechen zur Verarbeitung von Videomaterial einer Präsentation, eines Bühnenauftritts, einer politischen Diskussion und / oder einer Gesprächsrunde, einer Musikaufführung, insbesondere ein Orchesterauftritt, und / oder ein Dokumentationsfilm, beispielsweise ein Naturfilm, insbesondere ein Tierfilm.

Beispielsweise kann die Verarbeitung der Videoeingangssignale durch das Multimediasystem in Abhängigkeit vom Szenentyp beeinflusst werden im Hinblick auf beispielsweise Zeitdauern und Zeitpunkte, wann welches der Videoeingangssignale in das Videoausgangssignal eingemischt wird und / oder ob und / oder welche Videoeffekte wann auf welches Videoeingangssignal angewandt werden.

Die Anschlüsse, insbesondere die Videoeingänge und / oder der Videoausgang, können für drahtlose und / oder drahtgebundene Verbindungen zu anderen Geräten, insbesondere Kameras, eingerichtet sein. Beispielsweise ist denkbar, dass an die Videoeingänge PTZ- (englisch: pan-tilt-zoom) - Kameras anschließbar und / oder angeschlossen sind.

Die Videoeingänge können auch in Form eines einzelnen Eingangs realisiert sein, der zunächst ein einziges Videosignal aufnehmen kann, wobei nachfolgend aus dem einen Videosignal mehrere Videoeingangssignale extrahiert werden.

Beispielsweise kann eines der Videoeingangssignale einem ersten, insbesondere vorher definierten, Bildausschnitt des ursprünglichen Videoeingangssignals entsprechen. Ein zweites Videoeingangssignal kann einem zweiten, insbesondere vordefinierten, Bildausschnitt des ursprünglichen Videoeingangssignals entsprechen.

Das Multimediasystem kann auch ein oder mehrere Audioeingänge aufweisen zur Aufnahme eines oder mehrerer Audioeingangssignale.

Das Multimediasystem kann auch einen Videoklassifizierer umfassen. Der Videoklassifizierer kann eingerichtet sein, Objekte zu erkennen, insbesondere Objekte zu identifizieren und / oder deren Präsenz festzustellen, Objekte zu klassifizieren und / oder Objekte zu lokalisieren. Der Videoklassifizierer kann eingerichtet sein, eines der Videoeingangssignale auszuwerten, alternativ kann er auch eingerichtet sein, mehrere der Videoeingangssignale, insbesondere alle Videoeingangssignale, auszuwerten. Die Videoklassifizierungen können vorzugsweise in Abhängigkeit von Szenentyp erfolgen.

Das Multimediasystem kann auch einen Audioklassifizierer umfassen. Anhand von Klassifikationen eines oder mehrerer der Audioeingangssignale können Videoeingangssignale ausgewählt und / oder priorisiert werden. Dies kann vorzugsweise in Abhängigkeit vom Szenentyp erfolgen. Der Audioklassifizierer kann eine Stimmenklassifizierung umfassen. Beispielsweise kann er eingerichtet sein, unterschiedliche Personen, während sie sprechen, zu identifizieren und / oder voneinander zu unterscheiden. Anhand der Klassifikation kann dann beispielsweise jeweils dasjenige Videoeingangssignal ausgewählt werden, in dem die betreffende Person sichtbar ist.

Der Audioklassifizierer kann auch eingerichtet sein, Charakteristiken des Audiosignals zu klassifizieren. Beispielsweise kann er eingerichtet sein, Kategorien wie beispielsweise Stille, Stimme, Musik, Klatschen und / oder Lachen zu unterscheiden. Dann kann die Klassifikation verwendet werden, um beispielsweise ein Interesse eines Publikums in dem jeweiligen Zeitabschnitt zu bestimmen, insbesondere, wenn der Szenentyp einer Präsentation eines Vortrags oder dergleichen entspricht. Beispielsweise kann Klatschen einem hohen Interesse zugeordnet werden. Während Phasen, die einem starken Interesse des Publikums entsprechen, kann beispielsweise ein Videoeingangssignal ausgewählt werden, in dem das Publikum erkennbar ist.

Das Multimediasystem kann wenigstens einen Steuerausgang für ein Kamerasteuerungssignal zur Steuerung wenigstens einer Kamera, insbesondere einer PTZ-Kamera, umfassen. Insbesondere kann das Multimediasystem auch zur Steuerung mehrerer Kameras eingerichtet sein. Die Kameras können an die Videoeingänge anschließbar und / oder angeschlossen sein. Die Kamera kann auch mobil sein. Beispielsweise kann sie an eine Drohne und / oder an ein Fahrzeug montiert sein. In so einem Fall ist es auch denkbar, dass das Multimediasystem auch eingerichtet ist, die Position der Kamera zu steuern. Somit wird es möglich, insbesondere abhängig von dem Szenentyp, nicht nur ein Videoeingangssignal auszuwählen und / oder mehrere der Videoeingangssignale zu mischen, sondern auch die Aufnahme der Videoeingangssignale durch das Multimediasystem zu steuern. Beispielsweise kann das Multimediasystem eingerichtet sein, bei einem Szenentyp entsprechend einer Präsentation zunächst ein Flipchart oder dergleichen zu zeigen und dann auf die Person zu wechseln, die den Flipchart erläutert. Bei einem Szenentyp, der beispielsweise einer Bühnenaufführung entspricht, können einzelne Kameras auf die gesamte Bühne gerichtet werden, während andere Kameras auf einzelne der Vorführenden ausgerichtet werden.

Das Multimediasystem kann eingerichtet sein, mit wenigstens einer der Kameras und / oder dem Kamerasteuerungssignal für wenigstens eine Kamera ein Objekt, insbesondere eine Person, zu verfolgen. Abhängig vom Szenentyp können dann einzelne der von den Kameras aufgenommenen Objekte auch über einen längeren Zeitraum hinweg verfolgt und aufgenommen werden. Beispielsweise kann ein Sprecher bei einer Präsentation mit der Kamera verfolgt werden, während er sich beispielsweise von einem Flipchart oder von einem Rednerpult entfernt oder sich diesen wieder nähert.

Denkbar ist insbesondere, dass das Multimediasystem eingerichtet ist, in Abhängigkeit von dem Szenentyp das Kamerasteuerungssignal zu regeln. In einem Szenentyp für Action-Aufnahmen können beispielsweise schnellere Kamerabewegungen vorgesehen sein, während für Präsentationen langsamere Kamerabewegungen vorgesehen sind und / oder verschiedene Kameras auf unterschiedliche Objekte, beispielsweise auf eine sprechende Person sowie auf den Flipchart und / oder eine Präsentationsleinwand, gerichtet werden.

Zusätzlich kann das Multimediasystem eine Zustandsmaschine umfassen. Die Zustandsmaschine kann eingerichtet sein, anhand des Videoklassifizierers, des Audioklassifizierers und / oder einer Historie von Mischsteuerungssignalen, einer Historie von Auswahlen der Videoeingangssignale und / oder der Audioeingangssignale das Videoausgangssignal zu mischen und / oder das Mischsteuerungssignal zu generieren. Die Zustandsmaschine kann einen Satz von Regeln, insbesondere von Szenentyp-abhängigen Regeln, umfassen. Mithilfe der Zustandsmaschine kann auf einfache Weise, insbesondere in Echtzeit, eine Auswahl zwischen den Videoeingangssignalen und / oder den Audioeingangssignalen getroffen werden. Diese Signale können dann, insbesondere in Echtzeit, zum Videoausgangssignal gemischt werden.

Besonders vorteilhaft ist es, wenn das Mischsteuerungssignal und / oder das Videoausgangssignal in Echtzeit erzeugt werden. Insbesondere ist denkbar, dass das Multimediasystem eingerichtet ist, die Videoeingangssignale in Echtzeit aufzunehmen und auszuwerten. Auch bei einer solchen Echtzeit-Verarbeitung kann das Multimediasystem einen Zeitversatz zwischen den Videoeingangssignalen und entsprechenden Videoausgangssignal vorsehen. Durch eine solche Echtzeit-Verarbeitung wird es auch möglich, das Multimediasystem bei Live-Übertragungen zu verwenden.

Im Vergleich zu beispielsweise einem Maschinenlerner kann eine regelbasierte Zustandsmaschine vollständig reproduzierbare Ergebnisse produzieren. Hinterlegte Regeln können geändert werden. Dadurch kann das Verhalten der Zustandsmaschine im Vergleich zu beispielsweise einem Maschinenlerner in einfach nachvollziehbarer Weise beeinflusst werden. Auch werden so zur Einstellung des Verhaltens des Multimediasystems keine oder lediglich nur wenige Trainingsdaten benötigt.

Ein Maschinenlerner kann allgemein ein Modul für künstliche Intelligenz umfassen. Er kann beispielsweise ein anhand von Trainingsdaten durch überwachtes, unüberwachtes und / oder bestärkendes Lernen trainierbares und / oder selbstlernendes Modul umfassen, das ein- oder mehrdimensionalen Eingangsdaten basierend auf früherem oder fortlaufendem Training ein- oder mehrdimensionale Ausgangsdaten zuordnet. Der Maschinenlerner kann insbesondere ein neuronales Netz umfassen. Er kann beispielsweise eine Deep Learning-Einheit, insbesondere ein neuronales Netz mit ein oder mehreren verborgenen Schichten, umfassen. Er kann auch eine Support Vector Machine umfassen. Er kann auch ein Modul zur Implementierung eines Gradientenabstiegsverfahrens umfassen.

Bei einer Klasse von Multimediasystemen kann ein Szenentyp "Musikaufführung" vorgesehen sein, der auf eine Erstellung von Videosignalen für Musikaufführungen, beispielsweise ein Orchesterauftritt, spezialisiert ist. Aufgrund beispielsweise häufiger und schneller Wechsel von hervortretenden Instrumenten, können solche Musikaufführungen besondere Herausforderungen an die Produktion und Postproduktion stellen. Dementsprechend erfordern bislang Übertragungen von Musikaufführungen entweder hohe personelle Ressourcen und / oder eine Senkung von Ansprüchen an die produzierte Qualität. Durch ein solches Multimediasystem können dagegen speziell Musikaufführungen, insbesondere Orchesteraufführungen, besonders einfach und effizient aufgenommen und übertragen werden.

In den Rahmen der Erfindung fällt des Weiteren ein Verfahren zur Erstellung von Multimediainhalten mit einem Multimediasystem der vorangehend beschriebenen Art. Entsprechend dem Verfahren wird zunächst ein Szenentyp aus einer Liste von Szenentypen ausgewählt.

Durch Kenntnis des Szenentyps kann das Multimediasystem passend zu vorliegenden oder zu zukünftigen Videoeingangssignalen das Videoausgangssignal mischen oder über das Mischsteuerungssignal mischen lassen.

Insbesondere ist denkbar, dass eine Musikaufführung verarbeitet wird. Beispielsweise kann ein Orchesterauftritt aufgenommen und mithilfe des Multimediasystems zu einem Videoausgangssignal und / oder zu Steuersignalen für den Videomischer verarbeitet werden.

Häufig sind bei Musikaufführungen zusätzliche Musikdaten bekannt. Die Musikdaten können beispielsweise Aufnahmen einer Hauptprobe oder einer ähnlichen Probeaufführung sein. Die Musikdaten können auch Noten, beispielsweise Partituren, umfassen. Dann ist denkbar, dass in einem Vorbereitungsschritt die Musikdaten erfasst und ausgewertet werden. Anhand der Musikdaten kann bei einem entsprechend gewählten Szenentyp der Ablauf des Mischvorgangs während der eigentlichen Musikaufführung vorab ermittelt werden, sodass Positionen und Einstellungen der Kameras, insbesondere der PTZ-Kameras, für die Aufnahme und Mischvorgänge vorab optimiert werden können. Somit lässt sich die Qualität der erzeugten Videoausgangssignale noch weiter verbessern.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: eine schematische Blockdarstellung eines Multimediasystems,
- Fig. 2: ein Verfahren zur Erstellung von Multimediainhalten.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

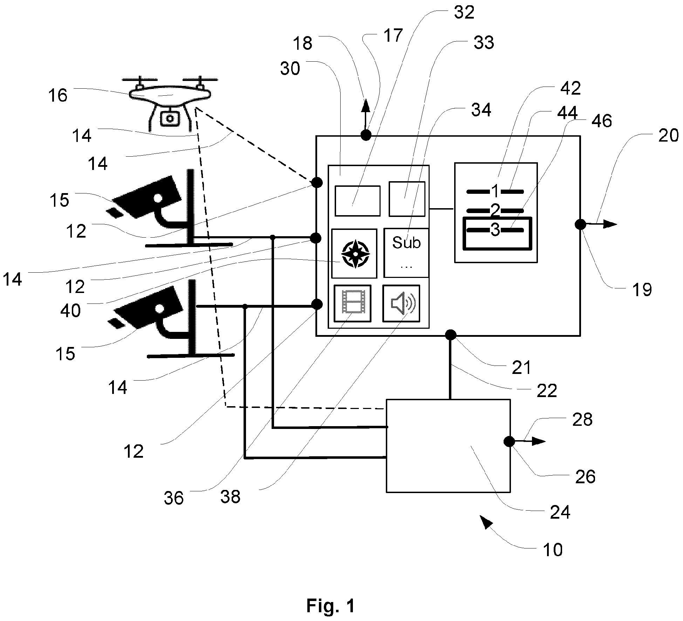

Fig. 1 zeigt ein Multimediasystem 10 zur Erstellung von Multimediainhalten, insbesondere zur Live-Aufnahme und -Übertragung von Veranstaltungen wie beispielsweise Präsentationen oder Musikauftritten.

Das Multimediasystem 10 umfasst bei diesem Ausführungsbeispiel drei Videoeingänge 12 zur Aufnahme von insgesamt drei Videoeingangssignalen 14. Die Videoeingangssignale 14 können bei diesem Ausführungsbeispiel von zwei nicht-mobilen Kameras 15 sowie von einer mobilen Kamera 16 geliefert werden. Die Videoeingangssignale 14 können je nach Ausführungsbeispiel drahtgebunden und / oder drahtlos übertragen werden. Das Multimediasystem 10 kann in anderen Ausführungsformen andere Kameraarten, Kameraanzahlen und / oder Übertragungsarten etc. aufweisen.

Im in Fig. 1 dargestellten Ausführungsbeispiel ist vorgesehen, die Videoeingangssignale 14 der Kameras 15 per Kabel an das Multimediasystem 10 anzuschließen, wohingegen die Videoeingangssignale 14 der mobilen Kamera 16 drahtlos übertragen werden. Je nach Übertragungsart der Videoeingangssignale 14 können die Videoeingänge 12 beispielsweise als Anschlussbuchsen oder als Funk-Datenschnittstelle ausgebildet sein.

Die nicht-mobilen Kameras 15 können beispielsweise auf einem Teleskopständer montiert sein. Die mobile Kamera 16 umfasst eine Drohne mit einer Videoaufnahmeeinheit.

Die Kameras 15 sowie die Videoaufnahmeeinheit der mobilen Kamera 16 sind jeweils kardanisch aufgehängt, sodass sie horizontal als auch vertikal fernsteuerbar geschwenkt werden können. Alle Kameras weisen zudem ein fernsteuerbares Zoomobjektiv auf. Die Kameras 15, 16 sind somit als PTZ-Kameras ausgebildet. Mithilfe der Drohne der mobilen Kamera 16 kann die mobile Kamera 16 auch ihre Position ferngesteuert verändern. Die Steuerung der Kameras 15, 16 erfolgt über einen Kamerasteuerausgang 17, der ein Kamerasteuerungssignal 18 in Form eines Funksignals zum Empfang durch die Kameras 15, 16 aussenden kann.

Das Multimediasystem 10 weist ferner einen Videoausgang 19 auf, an dem es ein Videoausgangssignal 20 bereitstellen kann. Der Videoausgang 19 kann ein digitaler Ausgang, insbesondere ein drahtgebundener und / oder ein drahtloser Netzwerkanschluss, und / oder ein analoger Ausgang sein. Das Videoausgangssignal 20 bildet dabei ein Produkt des Multimediasystems 10. Das Videoausgangssignal 20 kann vom Videoausgang 19 abgegriffen und z. B. auf einem angeschlossenen Monitor oder dergleichen betrachtet werden. Denkbar ist auch, das Videoausgangssignal 20 auf einer Speichereinheit, beispielsweise in einem Cloud-basierten Speicher, für einen späteren Abruf abzuspeichern.

Weiter weist das Multimediasystem 10 einen Mischsteuerausgang 21 auf, an dem es einen Mischsteuerungssignalen 22 zu einem Videomischer 24 senden kann. Der Videomischer 24 kann als separates Element ausgebildet und insofern nicht Teil des Multimediasystems 10 sein. In einer alternativen Ausführung bilden das Multimediasystem 10 und der Videomischer 24 eine Einheit.

Der Videomischer 24 weist einen Videoausgang 26 auf, an dem er ein Videoausgangssignal 28 bereitstellen kann. Der Videoausgang 26 sowie das Videoausgangssignal 28 können analog zu dem Videoausgang 19 bzw. dem Videoausgangssignal 20 ausgebildet sein. An den Videomischer 24 sind die Videoeingangssignale 14 abgezweigt, sodass der Videomischer 24 diese Videoeingangssignale 14 ebenfalls verarbeiten kann.

Bei alternativen Ausführungsformen des Multimediasystems 10 kann vorgesehen sein, das Multimediasystem 10 entweder mit dem Videoausgang 19 zur Bereitstellung des Videoausgangssignals 20 oder mit dem Mischsteuerausgang 21 zur Erzeugung des Mischsteuerungssignals 22 auszustatten.

Weiter umfasst das Multimediasystem 10 einen Rechner 30 mit einem Videoprozessor 32 und einer Zustandsmaschine 33. Ferner umfasst der Rechner 30 einen Speicher, in dem unter anderem ein Computerprogramm 34 abrufbar abgelegt ist. Das Computerprogramm 34 ist eingerichtet, auf dem Videoprozessor 32 ausgeführt zu werden, um die Funktionen des Multimediasystems 10 bei Ausführung des Computerprogramms 34 bereitzustellen.

Ferner weist der Rechner 30 einen Videoklassifizierer 36 zur Objektklassifizierung und Objektlokalisierung von Objekten, beispielsweise Personen, in den Videoeingangssignalen 14 auf.

Ein Audioklassifizierer 38 des Rechners 30 ist eingerichtet, in den Videoeingangssignalen 14 enthaltene Audiokanäle zu analysieren und enthaltene Audiosignale zu klassifizieren.

Darüber hinaus weist der Rechner 30 einen Objektverfolger 40 auf, der eingerichtet ist, Objekte, insbesondere Personen, in den Videoeingangssignalen 14 zu detektieren und deren Bewegungen zu verfolgen, insbesondere von identifizierten Objekten individuelle Positionen wiederholt zu bestimmen. Der Objektverfolger 40 ist zudem eingerichtet, Kamerasteuerungssignale 18 für die Kameras 15, 16 zu erzeugen, sodass ausgewählte Kameras der Kameras 15, 16 jeweils bestimmte Objekte, insbesondere bestimmte Personen, in den von ihnen bereitgestellten Videoeingangssignalen 14 verfolgen. Welches Objekt, insbesondere welche Person verfolgt wird, kann durch den Rechner 30 festgelegt werden.

Bei manchen Ausführungsbeispielen kann vorgesehen sein, dass der Objektverfolger 40 bei der Verfolgung der betreffenden Objekte bzw. Personen eine sogenannte Drittel-Regel berücksichtigt.

Insbesondere kann der Objektverfolger 40 eingerichtet sein, die betreffenden Objekte so zu verfolgen, dass sie optional gemäß der Drittel-Regel an Drittellinien der Videoaufnahmen der jeweils von ihm gesteuerten Kameras 15, 16 ausgerichtet sind. Die Drittellinien können optional in Abhängigkeit von Blickrichtungen bei der Verfolgung von Personen auswählbar sein. Je nach Blickrichtung kann ein Bildpunkt in einem linken, einem rechten oder einem mittleren Drittel als Zielpunkt ausgewählt werden.

Alternativ oder ergänzend ist auch denkbar, Objekte, insbesondere die Personen, an konfigurierbaren Bildpunkten innerhalb der Videoaufnahmen der Kameras 15, 16 auszurichten.

Eine mögliche Funktionsweise des Objektverfolgers 40 wird im Folgenden am Beispiel der Verfolgung einer Person näher erläutert.

Zunächst kann der Objektverfolger 40, beispielsweise mithilfe eines Maschinenlerners, Multi-Posen-Schätzungen der Videoeingangssignale 14 durchführen. Insbesondere kann er definierte Körperfixpunkte wie beispielsweise Nase, Augen, Schultern, Hände, Füße oder dergleichen für ein oder mehrere Personen auf jedem Einzelbild der Videoeingangssignale 14 ermitteln. Nun können die Posen den einzelnen Personen zeitlich konsistent zugeordnet werden. Denkbar ist, für die Zuordnung einen Kalman-Filter zu verwenden. Zum Einsatz kann auch eine Aussehenserkennung, mittels eines Feature Matching-Algorithmus, beispielsweise zum Feature-Matching von Kleidung oder dergleichen, kommen.

Gesichter der Personen, oder bei allgemeinen Objekten, bestimmte Einzelelemente der betreffenden Objekte, können identifiziert werden. Aufnahmen derselben Person können dann jeweils ein und derselben Person und Aufnahmen unterschiedlicher Personen unterschiedlichen Personen zugeordnet werden.

Durch Abgleich von Feature-Vektoren der identifizierten Gesichter bzw. Einzelelementen mit Daten einer zuvor erstellten Datenbank bekannter Personen oder Objekte kann die Verfolgung der Personen bzw. Objekte hinsichtlich der Genauigkeit und Zuverlässigkeit weiter verbessert werden.

Insbesondere in Abhängigkeit von einem noch näher zu erläuternden Szenentyp kann von den identifizierten Personen bzw. Objekten beispielsweise höchstens eine ausgewählte und als Zielperson definiert werden.

Die Auswahl der Zielperson kann nach unterschiedlichen Kriterien erfolgen. Beispielsweise können eine Person als Zielperson ausgewählt werden, die mit hoher Zuverlässigkeit erkannt wird. Es kann eine bestimmte, bekannte Person, beispielsweise mittels Gesichtserkennung, ausgewählt werden. Denkbar ist auch, dass das Multimediasystem 10 eine manuelle Auswahl der Zielperson durch einen Benutzer des Multimediasystems 10 ermöglicht.

Kann eine zu verfolgende Person bzw. ein zu verfolgendes Objekt in den Videoeingangssignalen 14 nicht mehr detektiert werden, beispielsweise weil die Person einen von den Kameras 15, 16 erfassten Raum verlassen hat, so kann der Objektverfolger 40 einen konfigurierbaren Sondermodus aktivieren. Der Sondermodus kann beispielsweise vorsehen, dass die Kameras 15, 16 in eine Ausgangsposition zurückgesetzt werden. Alternativ kann der Sondermodus vorsehen, dass die Kameras 15, 16 den überwachten Raum absuchen. Dazu können sie beispielsweise ihre Zoomobjektive langsam herauszoomen. Sobald die Zielperson wieder detektiert wird, kann der Objektverfolger 40 wieder in seinen normalen Betrieb zurückkehren.

Um eine möglichst präzise Verfolgung der Personen bzw. Objekte zu erreichen, kann der Objektverfolger 40 vorab auf die spezifischen Kameras 15, 16 kalibriert sein bzw. werden.

Um für die Einstellung der Kameras 15, 16 erforderliche Winkelgeschwindigkeiten berechnen zu können, kann der Objektverfolger 40 ferner eingerichtet sein, eine Sichtfeldgröße von den Kameras 15, 16 regelmäßig abzufragen.

Um unterschiedliche Arten von Kameras 15, 16 einsetzen zu können, kann der Objektverfolger 40 eingerichtet sein, abhängig von der Art oder den Arten der Kameras 15, 16 kameraspezifische Kamerasteuerungssignale 18 zu erzeugen.

Weiter weist das Multimediasystem 10 ein berührungsempfindliches Display 42 auf, auf dem der Benutzer in einer Liste 44 von Szenentypen einen aktuellen Szenentyp 46 auswählen kann.

Im in Fig. 1 gezeigten Beispiel ist ein beispielhaft als "3" bezeichneter Szenentyp 46 ausgewählt. Als ausführbare Szenentypen können in der Liste 44 beispielsweise unter anderem eine Präsentation oder ein Vortrag, ein Bühnenauftritt, eine Musikaufführung, insbesondere eine Orchesteraufführung, eine Gesprächsrunde, insbesondere mit mehreren Personen, ein Zweier-Interview, eine Sportveranstaltung, beispielsweise ein Fußballspiel oder ein Basketballspiel, etc. auswählbar sein.

Die Auswahl des Szenentyps 46 kann in anderen Ausführungsformen auch auf andere Weise als über das Display 42, beispielsweise über ein Eingabeformular, beispielsweise in Form eines Onlineformulars, realisiert sein.

Die Zustandsmaschine 33, der Videoklassifizierer 36, der Audioklassifizierer 38 und / oder der Objektverfolger 40 können jeweils als eigenständige Elemente ausgebildet sein. In manchen Ausführungsformen ist auch denkbar, einen oder mehrerer dieser Komponenten 33, 36, 38 und / oder 40 mithilfe des Computerprogramms 34 bei Ausführung auf dem Videoprozessor 32 zu implementieren.

Die Komponenten 33, 36, 38 und / oder 40 können jeweils Maschinenlerner umfassen. Insbesondere bei der Zustandsmaschine 33 ist jedoch auch denkbar, dass diese eine deterministische, Regel-basierte Logik, insbesondere ohne Verwendung eines Maschinenlerners, umfasst.

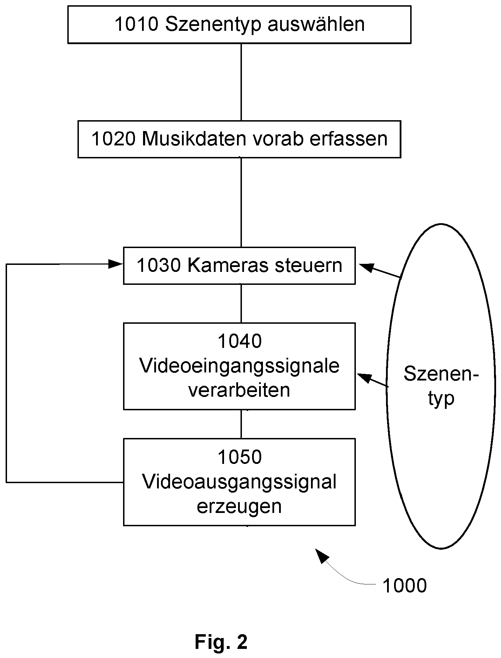

Fig. 2 zeigt ein Verfahren 1000 zur Erstellung von Multimediainhalten. Das Verfahren 1000 wird im Folgenden unter Bezugnahme auf die vorangehend eingeführten Elemente und Bezugszeichen näher erläutert.

In einem ersten Schritt 1010 wird ein Szenentyp 46 durch den Benutzer des Multimediasystems 10 auf dem Display 42 ausgewählt.

Das Verfahren 1000 wird im Folgenden beispielhaft für den Fall erläutert, dass der Szenentyp "Orchesterauftritt" ausgewählt wird.

Für diesen Szenentyp 46 kann ein optionaler Vorbereitungsschritt 1020 durchlaufen werden, bei dem vor Beginn der eigentlichen Videoaufnahmen Daten über den späteren Verlauf der aufzunehmenden Szene erfasst werden. Bei einer Präsentation kann dies beispielsweise ein später zu zeigender Foliensatz sein. Im hier beispielhaft angenommenen Fall eines Orchesterauftritts kann beispielsweise eine Hauptprobe vorneweg aufgenommen und als Musikdaten erfasst werden. Alternativ oder ergänzend kann die vom Orchester zu spielende Partitur als Musikdaten erfasst werden. Das Multimediasystem 10 kann dazu zum Empfang der Musikdaten, beispielsweise durch eigenes Aufnehmen, durch Übermitteln über das Internet, durch Abfotografieren und / oder durch Einscannen, eingerichtet sein.

Anhand der erfassten Musikdaten können im Rahmen dieses Vorbereitungsschritts 1020 Parameter der späteren Videoaufnahmen ermittelt werden. Beispielsweise können vorab Zeitpunkte und Positionen sowie Ausrichtungen der Kameras 15, 16, zumindest grob, bestimmt werden. Dazu kann beispielsweise ermittelt werden, wann welches Instrument oder Register des Orchesters oder beispielsweise wann welcher Solist zum Einsatz kommt und / oder im Videoausgangssignal besonders hervorgehoben erscheinen sollen.

Insbesondere bei wenig komplexen Szenentypen 46, beispielsweise bei Präsentationen, kann dieser Vorbereitungsschritt 1020 auch entfallen.

Ab Beginn der Videoaufnahmen, beispielsweise kurz vor Beginn des Auftritts des Orchesters, bis zum Ende der Videoaufnahmen, beispielsweise nach Abschluss des Auftritts des Orchesters, werden sodann drei Schritte 1030, 1040 und 1050 zyklisch durchlaufen. Soweit vom Ergebnis her möglich, können die Schritte 1030, 1040 und 1050 auch zumindest teilweise parallel oder in einer anderen Reihenfolge als der nachfolgend dargestellten ausgeführt werden.

Im Schritt 1030 werden in Abhängigkeit vom gewählten Szenentyp 46 die Kameras 15, 16 gesteuert. Insbesondere werden Kamerasteuerungssignale 18 so generiert, dass Instrumente oder Register, wenn sie beispielsweise solistische Stellen spielen, von einer der Kameras 15, 16 fokussiert und herangezoomt werden.

Im Schritt 1040 werden die Videoeingangssignale 14 unter Berücksichtigung des gewählten Szenentyps 46 verarbeitet.

Im Falle, dass der externe Videomischer 24 verwendet wird, werden dazu Mischsteuerungssignale 22 generiert und mit diesen der Videomischer 24 gesteuert.

In diesem Fall mischt der Videomischer 24, entsprechend den Mischsteuerungssignalen 22, die Videoeingangssignale 14 zum Videoausgangssignal 28 und präsentiert dieses am Videoausgang 26.

Im Falle, dass der externe Videomischer 24 nicht angeschlossen oder nicht verwendet werden kann oder soll, kann alternativ das Multimediasystem 10 die Videoeingangssignale 14 intern mischen und das sich ergebende Videoausgangssignal 20 an seinem Videoausgang 19 präsentieren.

Die Verarbeitung der Videoeingangssignale 14 während der Schritte 1030, 1040 und 1050 erfolgt in Abhängigkeit vom Szenentyp 46.

Bei unterschiedlichen Ausführungsformen können unterschiedliche Verarbeitungsweisen für Anzahlen und Arten von Szenentypen 46 im Multimediasystem 10 sowie beim Verfahren 1000 vorgesehen sein.

### 1. Einfache Szenentypen mit beispielsweise einem Sprecher

Einfache Szenentypen 46, beispielsweise Präsentationen, Vorträge oder allgemein, bei denen lediglich ein Sprecher im Vordergrund steht und gegebenenfalls noch ein Publikum optional anwesend ist, können nach einem vereinfachten Schema verarbeitet werden.

Bei einem solchen Schema kann die Zustandsmaschine 33 durch Eingangsvariablen auf Basis der Daten des Objektverfolgers 40, des Videoklassifizierer 36, des Audioklassifizierers 38 und / oder einer Historie vorheriger Schnittzeitpunkten und vorheriger Auswahlen zwischen den Videoeingangssignalen 14 gespeist werden.

Des Weiteren werden die Kameras 15, 16 entsprechend unterschiedlichen Shots gesteuert. Shots können beispielsweise Kameraeinstellungen entsprechend einem Fokus auf ein Gesamtbild, einen Sprecher, ein Publikum, eine Präsentation, beispielsweise ein Foliensatz oder eine Videoleinwand, entsprechen.

Unterschiedliche Kameras der Kameras 15, 16 werden unterschiedliche Shots zugeordnet und entsprechend, insbesondere mithilfe des Objektverfolgers 40, gesteuert. Im Ergebnis kann beispielsweise eine der Kameras 15 jeweils den Sprecher fokussieren, während die andere Kamera 15 die Präsentation fokussiert.

Die Kamera 16 kann beispielsweise ein im Raum anwesendes Publikum fokussieren.

Mithilfe des Videoklassifizierers 36 kann festgestellt werden, ob sich die Präsentation, beispielsweise die aktuell gezeigte Folie, geändert hat oder nicht. Bei einer Änderung der Präsentation kann die Zustandsmaschine 33 das zugehörige Videoeingangssignal 14 der jeweiligen Kamera 15, 16, die die Präsentation zeigt, zumindest temporär höher priorisieren.

Denkbar ist auch, dass der Videoklassifizierer 36 Inhalte der gezeigten Präsentation, beispielsweise mithilfe eines OCR-Algorithmus oder eines multimodalen Large Language Models, erkennt und daraus ableitet, ob der Sprecher über die Präsentation spricht oder über ein anderes Thema, und / oder ableitet, ob die aktuell gezeigte Folie interessant ist oder nicht. Abhängig von diesen Klassifizierungen kann dann wiederum ein geeigneter Shot bestimmt oder zumindest temporär priorisiert werden.

Mithilfe des Audioklassifizierers 38 wird klassifiziert, ob Stille, eine Stimme, Musik, ein Klatschen oder Lachen zu hören sind. Durch diese Klassifikation kann auf ein Interesse und dadurch auf den zu zeigenden Shot durch die Zustandsmaschine 33 geschlossen werden.

Bei Musik kann beispielsweise der Shot Gesamtbild ausgewählt werden.

Bei Applaus oder Lachen kann beispielsweise der Shot Publikum ausgewählt werden.

Mithilfe des Objektverfolgers 40 kann ermittelt werden, ob der Sprecher in einem der Videoeingangssignale 14 sichtbar ist oder nicht. Auch darauf aufbauend kann ein Shot ausgewählt werden oder zumindest die Auswahl eines Shots auf eine Untergruppe verfügbarer Shots begrenzt werden.

### 2. Komplexe Szenentypen mit mehreren Sprechern

Für komplexere Szenentypen 46, insbesondere mit mehreren Sprechern oder Personen, wird auf dem vorhergehend beschriebenen Schema aufgebaut und dieses erweitert.

Insbesondere kann der Audioklassifizierer 38 eingerichtet sein, unterschiedliche Sprecher zu identifizieren. Dann kann die Zustandsmaschine 33 einen Shot aktivieren, der den jeweils aktuellen Sprecher zeigt. Dazu kann entweder eine vorab ausgerichtete Kamera 15, 16 bzw. das ihr zugeordnete Videoeingangssignal 14 zumindest temporär priorisiert werden. Bei Bedarf wird eine der Kameras 15, 16 ausgewählt, um dann auf den aktuellen Sprecher ausgerichtet zu werden.

Sofern je Person mindestens ein Audiokanal in den Videoeingangssignalen 14 zur Verfügung steht, können zur Identifikation eines aktuellen Sprechers die Amplituden der Audiokanäle überwacht werden und bei Überschreiten eines Schwellwerts der betreffende Sprecher anhand des ihm zugeordneten Audiokanal identifiziert werden.

Alternativ oder ergänzend, beispielsweise wenn lediglich weniger Audiokanäle zur Verfügung stehen als Personen anwesend sind, können die jeweils aktuellen Sprecher auch durch auditive Sprecher-Erkennung durch den Audioklassifizierer 38 identifiziert und lokalisiert werden. Dazu kann der Audioklassifizierer 38 einen zur Sprecher-Erkennung trainierten Maschinenlerner umfassen.

Je nach Anzahl der verfügbaren Kameras 15, 16 können einzelne der Kameras 15, 16 vorab fix auf jeweils eine der Personen ausgerichtet werden.

Stehen dagegen nicht ausreichend Kameras 15, 16 zur Verfügung, können die Positionen der Personen, beispielsweise beim Szenentyp Gesprächsrunde, vorab, beispielsweise durch einen Gesamtbild-Shot ermittelt werden. Beginnt eine der Personen zu sprechen, kann dann eine ausgewählte Kamera 15, 16 durch die Multimediastation 10 auf diese Person ausgerichtet werden.

Die letztendliche Auswahl der Shots und / oder gegebenenfalls der Änderungen der Kamerapositionen und Zoom-Einstellungen erfolgt wiederum beispielsweise durch die Zustandsmaschine 33 anhand von in der Zustandsmaschine 33 hinterlegten Entscheidungsregeln.

### 3. Szenentypen Musikaufführungen betreffend, beispielsweise Orchesterauftritte

In beispielsweise sinfonischer Musik spielen meist nicht alle Instrumente oder zumindest nicht alle gleich interessante Partien zur selben Zeit. Analoges gilt für Sänger in beispielsweise Gesangsgruppen. Das vorangehend erläuterte Schema kann daher auf solche Situationen hin speziell modifiziert und / oder ergänzt werden.

Bei solchen Szenentypen können vorab Musikdaten oder allgemein Daten über einen zu erwartenden Ablauf des aufzunehmenden Inhalts vorliegen.

Um vorab eine Abfolge geeigneter Shots zu definieren, können gemäß dem Vorbereitungsschritt 1020 diese Musikdaten, oder allgemein vorab verfügbare Daten, vorab erfasst und ausgewertet werden.

Am Beispiel, dass als Musikdaten eine Referenzaudioaufnahme vorliegt, z.B. aus einer Probe, oder aufgenommen werden kann, werden im Folgenden eine Variante des Verfahrens 1000, bei der mit Hilfe der Referenzaudioaufnahme interessante Instrumente und daraus Abfolgen von geeigneten Shots bestimmt werden, sowie ein zur Implementation der Variante geeignetes Multimediasystem 10 vorgestellt.

Für ähnliche Anwendungen, beispielsweise bei anderen Arten von Musikaufführungen, kann in analoger Weise verfahren werden. Auch ergeben sich zu solchen Anwendungen analoge Ausführungsformen des Multimediasystems 10.

Die Bestimmung interessanter Instrumente ist ausgehend vom vorangehend beschriebenen Verfahren 1000 und dem vorangehend beschriebenen Multimediasystem 10 auf mehrere Weisen denkbar:
a)
   Der Rechner 30 kann zusätzlich ein Stem-Separation-Modul umfassen. Das Stem-Separation-Modul kann beispielsweise mithilfe eines spezifisch auf die Trennung von beispielsweise einzelnen orchestralen Instrumenten oder zumindest auf einzelne Register trainierten Maschinenlerner implementiert sein. Das Stem-Separation-Modul kann dann genutzt werden, um die Referenzaudioaufnahme in eine Vielzahl von Audiokanälen, insbesondere getrennt nach einzelnen Instrumenten oder Registern, zu zerlegen. Anschließend werden die einzelnen Audiokanäle mittels eines Transkriptionsmoduls des Rechners 30 transkribiert, insbesondere in Tonlagen, beispielsweise in Form von Musiknoten, übersetzt, sodass sich für die Gesamtheit der Audiokanäle beispielsweise ein Satz von Musiknoten ergibt.
   Abschließend kann regelbasiert, beispielsweise durch Regel-basierte Heuristiken, die Abfolge interessanter Instrumente auf Basis der transkribierten Notensätze bestimmt werden. Die Regel-basierten Heuristiken können ebenfalls mithilfe der Zustandsmaschine 33 implementiert sein.
b) Alternativ oder ergänzend ist auch denkbar, dass der Rechner 30 einen vorab trainierten Maschinenlerner umfasst, der zur direkten Ermittlung interessanter Instrumente aus einer Audioaufnahme trainiert ist. Dazu kann der Maschinenlerner mit einer Vielzahl von gelabelten Orchesteraufnahmen trainiert sein. Die Orchesteraufnahmen sollten dazu vorab mit zeitlichen Labels, welche Instrumente wann interessant sind, versehen sein. Somit kann dieser Maschinenlerner zu jedem Zeitpunkt ausgeben, mit welcher Wahrscheinlichkeit jedes einzelne vorhandene Instrument an einem bestimmten Zeitpunkt interessant ist bzw. im produzierten Videoausgangssignal 20 oder 28 hervorgehoben werden sollte.

Zur Produktionszeit wird beispielsweise die Live-Audioaufnahme des live spielenden Orchesters mit der Referenzaufnahme verglichen und so die Zeit in der Referenzaufnahme ermittelt, die dem aktuell live Gespielten entspricht. Basierend auf dieser zeitlichen Zuordnung können dann die zu einem jeweiligen Zeitpunkt interessanten Instrumente aus den für die Referenzaufnahme ermittelten Daten zugeordnet werden.

Grundsätzlich wäre bei diesem Ansatz auch denkbar, den trainierten Maschinenlerner direkt auf die Live-Audioaufnahme anzuwenden, dadurch könnte jedoch das jeweils interessante Instrument erst nach dessen Einsatz und somit mit zumindest geringer Verzögerung ermittelt werden. Eine solche Verzögerung kann durch Nutzung der Referenzaudioaufnahme wie vorangehend beschrieben vermieden werden. Es kann sogar vorauslaufend ein das Instrument betreffender Shot ausgewählt werden, bevor das Instrument während der Live-Audioaufmahme zu einem interessanten Instrument wird.

Stehen alternativ oder ergänzend zur Referenzaudioaufnahme auch Referenzvideodaten zur Verfügung, können diese analog verwendet werden. Insbesondere ist denkbar, Instrumente oder Register alternativ oder ergänzend anhand von Klassifikationen von beispielsweise Gesten eines identifizierten Dirigenten hinsichtlich des Interessantheitsgrades der Instrumente oder Register im zeitlichen Verlauf vorab zu bestimmen.

In Phasen, in denen kein Instrument als besonders interessant oder hervorhebenswert bestimmt wird, kann beispielsweise ein Gesamtbild des Orchesters als Shot ausgewählt werden. Auch ist für solche Phasen beispielsweise ein einen Dirigenten darstellender Shot denkbar.

Um eine zu starke Gleichförmigkeit der zu produzierenden Videoausgangssignale 20 bzw. 28 zu vermeiden, kann vorgesehen sein, beispielsweise auf Basis von Regel-basierten Heuristiken und / oder zu zufälligen, zumindest Pseudo-zufälligen, Zeitpunkten die bestimmten Shots gegen andere Shots, beispielsweise gegen einen Gesamtbild-Shot, auszutauschen. Zur Erhöhung der Variabilität ist auch denkbar, bei Shots einzelner Instrumente, insbesondere ebenfalls Regel-basiert, zwischen unterschiedlichen Shot-Größen, beispielsweise sogenannter "Close um", "Medium", "Wide Shot" oder "Zoom-Shots", während denen die Aufnahme kontinuierlich herein- oder herausgezoomt wird, zu variieren.

Während der aufzunehmenden Musikaufführung können dann zu den jeweiligen Zeitpunkten die jeweils bestimmten Shots eingestellt werden. Dazu ist die Kenntnis der Positionen der Instrumente oder Register und gegebenenfalls des Dirigenten erforderlich.

Die Positionen können bei einer Variante des Verfahrens 1000 vorab bestimmt werden. Dazu kann beispielsweise zu Beginn der Musikaufführungen und / oder während der Aufnahme der Referenzaudioaufnahme ein Gesamtbild des Orchesters mithilfe des Multimediasystems 10 aufgenommen werden. Beispielsweise mithilfe des entsprechend trainierten Videoklassifizierers 36 können die unterschiedlichen Instrumente oder Register durch Bildverarbeitung, beispielsweise mithilfe eines entsprechend zur Segmentierung von Instrumenten und / oder Personen, beispielsweise zur Erkennung des Dirigenten, trainierten Maschinenlerners des Videoklassifizierers 36, lokalisiert und deren Positionen abgespeichert werden.

Während der Musikaufführungen kann dann auf die gespeicherten Positionen zurückgegriffen werden. Diejenige Kamera 15, 16, die für den jeweiligen Shot auf das betreffende Instrument vorgesehen ist, kann vor Beginn des Shots auf die zugehörige, gespeicherte Position ausgerichtet und ihr Zoom entsprechend eingestellt werden.

Alternativ oder ergänzend kann auch zu Beginn oder während der Musikaufführungen zumindest eine der Kameras 15, 16 ein Gesamtbild des Orchesters aufnehmen, das dann analog ausgewertet wird.

Das Multimediasystem 10, beispielsweise die Zustandsmaschine 33 und / oder ein separater Shot-Terminierer, der ebenfalls Regel-basiert und / oder auf Basis eines Maschinenlerner arbeiten kann und ebenfalls Teil des Rechners 30 sein kann, ordnet jeweils eine der Kameras 15, 16 einem nächsten anstehenden Shot zu und richtet die jeweilige Kamera 15, 16 entsprechend dem Shot, in der Regel vorauslaufend, auf das aufzunehmende Instrument und / oder gegebenenfalls auf die aufzunehmende Person aus. Dabei kann das Multimediasystem 10 eingerichtet sein, eine möglichst gute Abdeckung der jeweiligen Instrumente zu erreichen. Wenn beispielsweise eine der Kameras 15, 16 bereits auf ein bestimmtes Instrument gerichtet ist, können andere der Kameras 15, 16 auf andere Instrumente, beispielsweise auf andere, demnächst als interessant klassifizierte Instrumente, gerichtet werden. So kann die Effizienz der Ausrichtungen und gegebenenfalls Positionierungen der Kameras 15, 16 verbessert werden. Auch kann dabei berücksichtigt werden, dass nur Kameras 15, 16 neu positioniert werden, die zum betreffenden Zeitpunkt nicht den jeweils aktuellen Shot aufnehmen, die also zum betreffenden Zeitpunkt tatsächlich frei verfügbar sind.

Beispielsweise anhand vorgegebener Regeln kann auch während der Musikaufführung, insbesondere, wenn nicht bereits vorab definiert, die Shot-Größe vom Multimediasystem 10 gewählt werden. Ferner kann das Multimediasystem 10 wählen, wie das Instrument oder allgemein das Zielobjekt oder die Zielperson im Bild, beispielsweise in einem linken Bilddrittel, in der Bildmitte oder einem rechten Bilddrittel, zu positionieren ist. Die Auswahl kann gemäß filmerischen Regeln implementiert sein.

Somit können mithilfe des Multimediasystems 10 sowie mithilfe des Verfahrens 1000 verschiedene Ereignisse und Veranstaltungen entsprechend bestimmten Szenentypen, insbesondere Orchesterauftritte, mit äußerst geringem Vorbereitungs- und Personalaufwand mit hoher Qualität der Produktion und Postproduktion aufgenommen und aufgezeichnet und / oder live übertragen werden.

### Bezugszeichenliste

- 10: Multimediasystem
- 12: Videoeingang
- 14: Videoeingangssignal
- 15: Kamera
- 16: mobile Kamera
- 17: Kamerasteuerausgang
- 18: Kamerasteuerungssignal
- 19: Videoausgang
- 20: Videoausgangssignal
- 21: Mischsteuerausgang
- 22: Mischsteuerungssignal
- 24: Videomischer
- 26: Videoausgang
- 28: Videoausgangssignal
- 30: Rechner
- 32: Videoprozessor
- 33: Zustandsmaschine
- 34: Computerprogramm
- 36: Videoklassifizierer
- 38: Audioklassifizierer
- 40: Objektverfolger
- 42: Display
- 44: Liste
- 46: Szenentyp
- 1000: Verfahren
- 1010: Schritt
- 1020: Vorbereitungsschritt
- 1030: Schritt
- 1040: Schritt

## Patentansprüche

1. Multimediasystem (10) zur Erstellung von Multimediainhalten, beispielsweise zur Erstellung von Videofilmen,
umfassend
- wenigstens zwei Videoeingänge (12) zur Aufnahme von wenigstens zwei Videoeingangssignalen (14),
- wenigstens einen Videoausgang (19, 26) zur Bereitstellung eines Videoausgangssignals (20, 28) und / oder wenigstens einen Mischsteuerausgang (21) zur Bereitstellung eines Mischsteuerungssignals (22) zur Steuerung eines Videomischers (24),
wobei das Multimediasystem (10) eingerichtet ist, in Abhängigkeit eines auswählbaren Szenentyps (46) , aus den wenigstens zwei Videoeingangssignalen (14) das Videoausgangssignal (20, 28) zu mischen und / oder das Mischsteuerungssignal (22) zur Steuerung des Videomischers (24) zu erzeugen.

2. Multimediasystem (10) nach dem vorhergehenden Anspruch, zusätzlich umfassend einen Videoklassifizierer (36) zur Objekterkennung, zur Objektklassifizierung und / oder zur Objektlokalisierung in wenigstens einem der Videoeingangssignale (14).

3. Multimediasystem (10) nach einem der vorhergehenden Ansprüche, zusätzlich umfassend einen Audioklassifizierer (38).

4. Multimediasystem (10) nach einem der vorhergehenden Ansprüche, zusätzlich umfassend wenigstens einen Kamerasteuerausgang (17) für ein Kamerasteuerungssignal (18) zur Steuerung wenigstens einer Kamera (15, 16), beispielsweise einer PTZ-Kamera.

5. Multimediasystem (10) nach einem der vorhergehenden Ansprüche, **dadurch gekennzeichnet, dass** das Multimediasystem (10) eingerichtet ist, mit wenigstens einer der Kameras (15, 16) und / oder dem Kamerasteuerungssignal (18) für wenigstens eine Kamera (15) ein Objekt, insbesondere eine Person, zu verfolgen.

6. Multimediasystem (10) nach einem der vorhergehenden Ansprüche, **dadurch gekennzeichnet, dass** das Multimediasystem (10) eingerichtet ist, in Abhängigkeit von dem Szenentyp (46) das Kamerasteuerungssignal (18) zu generieren.

7. Multimediasystem (10) nach einem der vorhergehenden Ansprüche, zusätzlich umfassend eine Zustandsmaschine (33), die eingerichtet ist, anhand des Videoklassifizierers (36), des Audioklassifizierers (38), und / oder einer Historie von Auswahlen der Videoeingangssignale (14) und / oder der Audioeingangssignale das Videoausgangssignal (20) zu mischen und / oder das Mischsteuerungssignal (22) zu generieren.

8. Multimediasystem (10) nach einem der vorhergehenden Ansprüche, **dadurch gekennzeichnet, dass** das Mischsteuerungssignal (22) und / oder das Videoausgangssignal (20) in Echtzeit erzeugt werden.

9. Multimediasystem (10) nach einem der vorhergehenden Ansprüche, **dadurch gekennzeichnet, dass** das Multimediasystem (10) einen speziellen Szenentyp (46) umfasst zur Erstellung von Videosignalen für eine Musikaufführung.

10. Verfahren (1000) zur Erstellung von Multimediainhalten mit einem Multimediasystem (10) nach einem der vorhergehenden Ansprüche, wobei ein Szenentyp (46) aus einer Liste (44) von Szenentypen (46) ausgewählt wird und wobei in Abhängigkeit von dem Szenentyp (46) wenigstens zwei verschiedene Videoeingangssignale (14) durch das Multimediasystem (10) verarbeitet werden und in Abhängigkeit von dem Szenentyp (46) und den Videoeingangssignalen (14) das Mischsteuerungssignal (22) und / oder das Videoausgangssignal (20) erzeugt werden.

11. Verfahren (1000) nach dem vorhergehenden Anspruch, **dadurch gekennzeichnet, dass** eine Musikaufführung verarbeitet wird.

12. Verfahren (1000) nach einem der Ansprüche 10 oder 12, **dadurch gekennzeichnet, dass** in einem Vorbereitungsschritt (1020) Musikdaten, beispielsweise eine Referenzaudioaufnahme, erfasst und ausgewertet werden.

13. Computerprogramm (34), das eingerichtet ist, bei Ausführung auf einem Rechner (30) eines Multimediasystems (10) nach einem der Patentansprüche 1 bis 9 ein Verfahren (1000) nach einem der Ansprüche 10 bis 12 zu implementieren.

14. Maschinenlesbares Speichermedium mit einem darauf gespeicherten Computerprogramm (34) nach Anspruch 13.

## Geänderte Patentansprüche

### Geänderte Patentansprüche gemäss Regel 137(2) EPÜ.

1. Multimediasystem (10) zur Erstellung von Multimediainhalten, beispielsweise zur Erstellung von Videofilmen,
umfassend
- wenigstens zwei Videoeingänge (12) zur Aufnahme von wenigstens zwei Videoeingangssignalen (14),
- wenigstens einen Videoausgang (19, 26) zur Bereitstellung eines Videoausgangssignals (20, 28) und / oder wenigstens einen Mischsteuerausgang (21) zur Bereitstellung eines Mischsteuerungssignals (22) zur Steuerung eines Videomischers (24),
wobei das Multimediasystem (10) eingerichtet ist, in Abhängigkeit eines auswählbaren Szenentyps (46) , aus den wenigstens zwei Videoeingangssignalen (14) das Videoausgangssignal (20, 28) zu mischen und / oder das Mischsteuerungssignal (22) zur Steuerung des Videomischers (24) zu erzeugen,
**dadurch gekennzeichnet, dass**
- das Multimediasystem (10) zusätzlich einen Audioklassifizierer (38) umfasst, wobei der Audioklassifizierer (38) eingerichtet ist, unterschiedliche Personen, während sie sprechen, zu identifizieren und / oder voneinander zu unterscheiden, und wobei das Multimediasystem (10) eingerichtet ist, anhand der Klassifikation des Audioklassifizierers (38) ein Videoeingangssignal auszuwählen, in dem eine betreffende Person sichtbar ist,
und / oder dass
- das Multimediasystem (10) zur Verarbeitung einer Musikaufführung eingerichtet ist, wobei ein Orchesterauftritt aufgenommen und mithilfe des Multimediasystems (10) zu einem Videoausgangssignal und / oder zu Steuersignalen für den Videomischer verarbeitet wird, wobei das Multimediasystem (10) einen Rechner (30) umfasst, wobei der Rechner (30) einen vorab trainierten Maschinenlerner umfasst, der zur direkten Ermittlung interessanter Instrumente aus einer Audioaufnahme trainiert ist.

2. Multimediasystem (10) nach dem vorhergehenden Anspruch, zusätzlich umfassend einen Videoklassifizierer (36) zur Objekterkennung, zur Objektklassifizierung und / oder zur Objektlokalisierung in wenigstens einem der Videoeingangssignale (14), wobei der Videoklassifizierer (36) eingerichtet ist, Inhalte einer gezeigten Präsentation zu erkennen und daraus abzuleiten, ob ein Sprecher über die Präsentation spricht oder über ein anderes Thema, und / oder ableitet, ob eine aktuell gezeigte Folie interessant ist oder nicht, und wobei das Multimediasystem (10) abhängig von diesen Klassifizierungen einen geeigneten Shot bestimmt oder zumindest temporär priorisiert.

3. Multimediasystem (10) nach einem der vorhergehenden Ansprüche, **dadurch gekennzeichnet, dass** das Multimediasystem (10) eingerichtet ist, mit wenigstens einer der Kameras (15, 16) und / oder dem Kamerasteuerungssignal (18) für wenigstens eine Kamera (15) ein Objekt, insbesondere eine Person, zu verfolgen.

4. Multimediasystem (10) nach einem der vorhergehenden Ansprüche, **dadurch gekennzeichnet, dass** das Multimediasystem (10) eingerichtet ist, in Abhängigkeit von dem Szenentyp (46) das Kamerasteuerungssignal (18) zu generieren.

5. Multimediasystem (10) nach einem der vorhergehenden Ansprüche, zusätzlich umfassend eine Zustandsmaschine (33), die eingerichtet ist, anhand des Videoklassifizierers (36), des Audioklassifizierers (38), und / oder einer Historie von Auswahlen der Videoeingangssignale (14) und / oder von Audioeingangssignalen das Videoausgangssignal (20) zu mischen und / oder das Mischsteuerungssignal (22) zu generieren.

6. Multimediasystem (10) nach dem vorhergehenden Anspruch, **dadurch gekennzeichnet, dass** das Mischsteuerungssignal (22) und / oder das Videoausgangssignal (20) in Echtzeit erzeugt werden.

7. Multimediasystem (10) nach einem der vorhergehenden Ansprüche, **dadurch gekennzeichnet, dass** das Multimediasystem (10) einen speziellen Szenentyp (46) umfasst zur Erstellung von Videosignalen für eine Musikaufführung.

8. Verfahren (1000) zur Erstellung von Multimediainhalten mit einem Multimediasystem (10) nach einem der vorhergehenden Ansprüche, wobei ein Szenentyp (46) aus einer Liste (44) von Szenentypen (46) ausgewählt wird und wobei in Abhängigkeit von dem Szenentyp (46) wenigstens zwei verschiedene Videoeingangssignale (14) durch das Multimediasystem (10) verarbeitet werden und in Abhängigkeit von dem Szenentyp (46) und den Videoeingangssignalen (14) das Mischsteuerungssignal (22) und / oder das Videoausgangssignal (20) erzeugt werden.

9. Computerprogramm (34), das eingerichtet ist, bei Ausführung auf einem Rechner (30) eines Multimediasystems (10) nach einem der Patentansprüche 1 bis 9 ein Verfahren (1000) nach einem der Ansprüche 10 bis 12 zu implementieren.

10. Maschinenlesbares Speichermedium mit einem darauf gespeicherten Computerprogramm (34) nach Anspruch 13.
